# EUROPÄISCHE PATENTANMELDUNG

(11) **EP 4 015 328 A1**
(43) Veröffentlichungstag der Anmeldung: **22.06.2022**
(21) Anmeldenummer: 21211698.2
(22) Anmeldetag: 01.12.2021
(51) Int. Cl.: B60W 30/06, B62D 15/02, B60S 11/00, B60S 9/02, B60P 3/32

(54) **VERFAHREN ZUM BETREIBEN EINES KRAFTFAHRZEUGS SOWIE KRAFTFAHRZEUG**

(30) Priorität: 15.12.2020 DE 102020215961
(71) Anmelder: VOLKSWAGEN AG, 38440 Wolfsburg (DE)
(72) Erfinder: Bohnstedt, Kai, 14163 Berlin Zehlendorf (DE)

(57) **Zusammenfassung**

Die Erfindung betrifft ein Verfahren zum Betreiben eines Kraftfahrzeugs (10), bei welchem mittels einer elektronischen Recheneinrichtung (16) eine eine Länge einer Wegstrecke charakterisierende Benutzereingabe empfangen wird und mittels einer Steuereinrichtung (20) das Kraftfahrzeug (10) zumindest teilautomatisiert die durch die Benutzereingabe charakterisierte Länge entlang der Wegstrecke bewegt wird, oder bei welchem mittels einer Orientierungserfassungseinrichtung (14) eine Schrägausrichtung des Kraftfahrzeugs (10) relativ zu einer Horizontalebene ermittelt wird, eine räumliche Lage und Geometrie wenigstens eines Ausgleichselements (24) ermittelt werden, auf welchem das Kraftfahrzeug (10) anordenbar ist, und mittels einer elektronischen Recheneinrichtung (16) in Abhängigkeit von der ermittelten Schrägausrichtung des Kraftfahrzeugs (10) und der ermittelten räumlichen Lage und Geometrie des wenigstens eines Ausgleichselements (24) eine Ausgleichsstrecke ermittelt und bereitgestellt wird, entlang welcher für ein Geraderichten des Kraftfahrzeugs (10) das Kraftfahrzeug (10) auf dem wenigstens einen Ausgleichselement (24) zu bewegen ist.

## Beschreibung

Die Erfindung betrifft ein Verfahren zum Betreiben eines Kraftfahrzeugs sowie ein Kraftfahrzeug.

Insbesondere bei einem Wohnmobil kann eine Schräglage unerwünscht sein. Es ist grundsätzlich bekannt, eine Schräglage eines Wohnmobils mittels wenigstens eines Ausgleichskeils auszugleichen, indem das Wohnmobil mit einem Rad auf dem Ausgleichskeil platziert wird. Hierbei kann es jedoch aufgrund einer schlechten Einsehbarkeit jeweiliger Räder des Wohnmobils von einem Fahrersitzplatz im Wohnmobil aus für den Fahrer des Wohnmobils sehr schwer sein, das jeweilige Rad präzise auf dem zugeordneten Ausgleichskeil zu platzieren.

Aus der DE 20 2009 012 107 U1 ist bereits eine Vorrichtung zum Signalisieren der Radposition eines Wohnmobils, Verkaufsfahrzeugs oder dergleichen bekannt, wobei die Vorrichtung an einem Auffahrkeil montiert ist. Die Vorrichtung umfasst Sensoren, welche einem Fahrer des Wohnmobils beziehungsweise des Verkaufsfahrzeugs melden kann, wie weit das Rad auf dem Auffahrkeil steht und wann ein Ende des Auffahrkeils erreicht ist.

Aufgabe der vorliegenden Erfindung ist es, eine Lösung zu schaffen, welche ein besonders einfaches Ausgleichen einer Schrägstellung eines Kraftfahrzeugs durch Bewegen des Kraftfahrzeugs über wenigstens ein Ausgleichselement ermöglicht.

Diese Aufgabe wird erfindungsgemäß durch die Gegenstände der unabhängigen Patentansprüche gelöst. Weitere mögliche Ausgestaltungen der Erfindung sind in den Unteransprüchen, der Beschreibung und den Figuren offenbart.

Die Erfindung betrifft ein Verfahren zum Betreiben eines Kraftfahrzeugs, bei welchem mittels einer elektronischen Recheneinrichtung eine eine Länge einer Wegstrecke charakterisierende Benutzereingabe empfangen wird und mittels einer Steuereinrichtung das Kraftfahrzeug zumindest teilautomatisiert die durch die Benutzereingabe charakterisierte Länge entlang der Wegstrecke bewegt wird. Das bedeutet, dass bei dem Verfahren eine Person die Wegstrecke für das Kraftfahrzeug über die Benutzereingabe vorgibt und das Kraftfahrzeug mittels der Steuereinrichtung für die vorgegebene Länge der Wegstrecke bewegt wird. Insbesondere bei einer Ausgestaltung des Kraftfahrzeugs als Wohnmobil, wenn das Wohnmobil auf wenigstens einem Ausgleichskeil für ein Ausgleichen einer Schräge anzuordnen ist, kann die Person vorgeben, wie weit das Wohnmobil entlang des Ausgleichskeils hochfahren soll. Die Person kann somit über die Benutzereingabe das besonders präzise Bewegen des Kraftfahrzeugs für die vorgegebene Länge auslösen.

Alternativ wird bei dem Verfahren zum Betreiben des Kraftfahrzeugs mittels einer Orientierungserfassungseinrichtung eine Schrägausrichtung des Kraftfahrzeugs relativ zu einer Horizontalebene ermittelt wird. Mit anderen Worten wird mittels der Orientierungserfassungseinrichtung eine Verschwenkung des Kraftfahrzeugs um eine Fahrzeuglängsachse und/oder um eine Fahrzeugquerachse relativ zu der Horizontalebene ermittelt. Die Horizontalebene kann in ihrer Ausrichtung einen Gewichtskraftvektor des Kraftfahrzeugs senkrecht schneidend vorgegeben sein. Es wird somit mittels der Orientierungserfassungseinrichtung festgestellt, ob das Kraftfahrzeug schräg zur Horizontalebene ausgerichtet ist und damit um die Fahrzeuglängsachse und/oder die Fahrzeugquerachse relativ zur Horizontalebene verschwenkt ist. Bei dem Kraftfahrzeug kann es sich insbesondere um einen Kraftwagen handeln. Bei dem Kraftwagen kann es sich um einen Personenkraftwagen, insbesondere um ein Wohnmobil, handeln. Bei dem Verfahren ist es des Weiteren vorgesehen, dass eine räumliche Lage und Geometrie wenigstens eines Ausgleichselements ermittelt werden, auf welchem das Kraftfahrzeug anordenbar ist. Unter der räumlichen Lage ist insbesondere eine Position und Orientierung des Ausgleichselements zu verstehen, wobei die räumliche Lage insbesondere in Relation zu dem Kraftfahrzeug ermittelt wird. Bei dem Ausgleichselement kann es sich beispielsweise um einen Ausgleichskeil handeln, mittels welchem die Schrägausrichtung des Kraftfahrzeugs ausgleichbar ist. Die Schrägausrichtung des Kraftfahrzeugs kann insbesondere aus einer Unebenheit beziehungsweise einer Steigung eines Untergrunds, auf welchem das Kraftfahrzeug angeordnet ist, resultieren. Alternativ zu der Ausgestaltung des wenigstens einen Ausgleichselements als Ausgleichskeil kann das wenigstens eine Ausgleichselement als Rampe oder als Bühne ausgebildet sein. Insbesondere bei dem Wohnmobil ist es vorgesehen, dass die ermittelte Schrägstellung des Wohnmobils mittels des wenigstens einen Ausgleichselements hinsichtlich der Horizontalebene ausgeglichen wird.

Um ein besonders vorteilhaftes Ausgleichen der Schrägausrichtung des Kraftfahrzeugs mittels des wenigstens einen Ausgleichselements zu ermöglichen, ist es bei dem Verfahren vorgesehen, dass mittels einer elektronischen Recheneinrichtung in Abhängigkeit von der ermittelten Schrägausrichtung des Kraftfahrzeugs und der ermittelten räumlichen Lage und Geometrie des wenigstens einen Ausgleichselements eine Ausgleichsstrecke ermittelt und bereitgestellt wird. Die Ausgleichsstrecke kann zusätzlich in Abhängigkeit von einer Einfederung der Räder des Kraftfahrzeugs ermittelt werden. Entlang dieser Ausgleichsstrecke ist für ein Geraderichten des Kraftfahrzeugs das Kraftfahrzeug auf dem wenigstens einen Ausgleichselement zu bewegen. Unter dem Geraderichten des Kraftfahrzeugs ist ein Ausgleichen der Schrägausrichtung des Kraftfahrzeugs relativ zu der Horizontalebene und somit ein horizontales Ausrichten des Kraftfahrzeugs zu verstehen. Das wenigstens eine Ausgleichselement kann insbesondere wenigstens zwei zueinander schräg ausgerichtete Oberflächen aufweisen, wobei unter der schrägen Ausrichtung der Oberflächen zu verstehen ist, dass jeweilige durch die Oberflächen aufgespannte Ebenen sich unter einem spitzen Winkel miteinander schneiden. Über eine der Oberflächen kann das wenigstens eine Ausgleichselement auf dem Untergrund angeordnet werden, wobei die zu der auf dem Untergrund angeordneten Oberfläche schräge Oberfläche des wenigstens einen Ausgleichselements dazu eingerichtet ist, mit dem Kraftfahrzeug, insbesondere wenigstens einem Rad des Kraftfahrzeugs, kontaktiert zu werden, insbesondere für ein Auffahren des Kraftfahrzeugs entlang der Ausgleichsstrecke auf das wenigstens eine Ausgleichselement.

Um ein Auffahren des Kraftfahrzeugs entlang der Ausgleichsstrecke auf das wenigstens eine Ausgleichselement zu ermöglichen, ist es vorgesehen, dass das wenigstens eine Ausgleichselement in Fahrtrichtung vor wenigstens einem der Räder des Kraftfahrzeugs angeordnet ist, wobei die Ausgleichsstrecke in Abhängigkeit von der ermittelten räumlichen Lage und Geometrie des wenigstens einen in Fahrtrichtung vor wenigstens einem der Räder des Kraftfahrzeugs angeordneten Ausgleichselements ermittelt wird. Hierbei führt die Ausgleichsstrecke zumindest bereichsweise über eine Oberfläche des wenigstens einen Ausgleichselements, insbesondere über die schräg zu der auf dem Untergrund angeordneten Oberfläche ausgerichtete Oberfläche des Ausgleichselements. Das Verfahren ermöglicht ein besonders einfaches Ermitteln der Ausgleichsstrecke, entlang welcher das Kraftfahrzeug zu bewegen ist, um die Schrägausrichtung des Kraftfahrzeugs auszugleichen beziehungsweise das Kraftfahrzeug gerade zu richten.

In einer Weiterbildung der Erfindung ist es vorgesehen, dass mittels einer Ausgabeeinrichtung die ermittelte Ausgleichsstrecke ausgegeben wird. Das bedeutet, dass bei dem Verfahren die mittels der elektronischen Recheneinrichtung ermittelte Ausgleichsstrecke mittels der elektronischen Recheneinrichtung für die Ausgabeeinrichtung bereitgestellt wird. Mittels der Ausgabeeinrichtung kann von der elektronischen Recheneinrichtung die ermittelte Ausgleichsstrecke empfangen und ausgegeben werden. Die Ausgabeeinrichtung kann Teil des Kraftfahrzeugs oder Teil eines mobilen elektronischen Endgeräts sein. Die Ausgabeeinrichtung kann dazu eingerichtet sein, die ermittelte Ausgleichsstrecke optisch und/oder akustisch und/oder haptisch auszugeben. Beispielsweise kann die Ausgabeeinrichtung als Bildschirmeinrichtung im Kraftfahrzeug ausgebildet sein, wodurch ein Fahrer des Kraftfahrzeugs mittels der Bildschirmeinrichtung besonders einfach über die ermittelte Ausgleichsstrecke informiert werden kann. Infolgedessen kann der Fahrer das Kraftfahrzeug entlang der Ausgleichsstrecke führen. Hierdurch ermöglicht das Verfahren ein besonders vorteilhaftes Unterstützen des Fahrers des Kraftfahrzeugs bei einem Manövrieren des Kraftfahrzeugs auf das wenigstens eine Ausgleichselement beziehungsweise bei dem Geraderichten des Kraftfahrzeugs durch Bewegen des Kraftfahrzeugs auf das wenigstens eine Ausgleichselement beziehungsweise auf dem wenigstens einen Ausgleichselement.

In weiterer Ausgestaltung der Erfindung ist es vorgesehen, dass mittels einer Steuereinrichtung das Kraftfahrzeug zumindest teilautomatisiert entlang der Ausgleichsstrecke bewegt wird. Das bedeutet, dass mittels der elektronischen Recheneinrichtung die ermittelte Ausgleichsstrecke für die Steuereinrichtung bereitgestellt wird. Somit wird mittels der Steuereinrichtung die von der elektronischen Recheneinrichtung bereitgestellte Ausgleichsstrecke empfangen und das Kraftfahrzeug entlang der Ausgleichsstrecke mittels der Steuereinrichtung gesteuert. Mittels der Steuereinrichtung kann das Kraftfahrzeug quergesteuert und/oder längsgesteuert werden. Insbesondere kann die Steuereinrichtung dazu eingerichtet sein, das Kraftfahrzeug autonom entlang der Ausgleichsstrecke zu bewegen. Das Bewegen des Kraftfahrzeugs mittels der Steuereinrichtung ermöglicht, dass das Kraftfahrzeug besonders präzise entlang der Ausgleichsstrecke bewegt wird.

In einer weiteren Ausgestaltung der Erfindung ist es vorgesehen, dass in Abhängigkeit von der ermittelten Geometrie des wenigstens einen Ausgleichselements eine Grenzbedingung für die Ausgleichsstrecke ermittelt wird und die Ausgleichsstrecke in Abhängigkeit von der Grenzbedingung ermittelt wird. Hierbei kann die wenigstens eine Grenzbedingung in Abhängigkeit von jeweiligen Abmessungen einer von dem Kraftfahrzeug befahrbaren Oberfläche des wenigstens einen Ausgleichselements ermittelt werden. Beispielsweise kann ein Ende der Ausgleichsstrecke in Abhängigkeit von einer Länge der von dem Kraftfahrzeug zu befahrenden Oberfläche des wenigstens einen Ausgleichselements ermittelt werden. Hierdurch kann sichergestellt werden, dass ein Überfahren des wenigstens einen Ausgleichselements durch das Kraftfahrzeug unterbleibt. Beispielsweise kann bei der Ausgestaltung des wenigstens einen Ausgleichselements als Ausgleichskeil eine maximal zur Verfügung stehende Keillänge in das Ermitteln der Ausgleichsstrecke mit einbezogen werden. Hierdurch kann vermieden werden, dass das Kraftfahrzeug ungewünscht beim Fahren entlang der Ausgleichsstrecke von dem wenigstens einen Ausgleichselement herunterfährt.

In einer weiteren Ausgestaltung der Erfindung ist vorgesehen, dass in Abhängigkeit von der ermittelten Ausgleichsstrecke für das wenigstens eine Ausgleichselement eine Soll-Lage ermittelt wird, in welcher das wenigstens eine Ausgleichselement relativ zu dem Kraftfahrzeug anzuordnen ist, wodurch das Kraftfahrzeug entlang der ermittelten Ausgleichsstrecke bewegbar ist, und die ermittelte Soll-Lage mittels der Ausgabeeinrichtung ausgegeben wird. Insbesondere wird die ermittelte Soll-Lage relativ zu wenigstens einem Rad des Kraftfahrzeugs vorgegeben. Diese Soll-Lage kann in Abhängigkeit von einer Einfederung der Räder des Kraftfahrzeugs ermittelt werden. Das Ausgeben der ermittelten Solllage des wenigstens einen Ausgleichselements mittels der Ausgabeeinrichtung ermöglicht, dass der Fahrer des Kraftfahrzeugs oder ein weiterer Fahrzeuginsasse des Kraftfahrzeugs das wenigstens eine Ausgleichselement in der ermittelten Soll-Lage und somit in der vorgegebenen Sollposition und Sollorientierung relativ zu dem wenigstens einen Rad des Kraftfahrzeugs anordnen kann. Bei dem Verfahren kann somit ermittelt werden, an welcher Relativposition und in welcher relativen Orientierung das wenigstens eine Ausgleichselement relativ zu wenigstens einem der Räder des Kraftfahrzeugs auszurichten ist, um eine Ausgleichsstrecke ermitteln zu können, welche ein Geradestellen des Kraftfahrzeugs beziehungsweise ein besonders gutes Ausgleichen der Schrägausrichtung des Kraftfahrzeugs relativ zu der Horizontalebene ermöglicht. Es kann somit bei dem Verfahren in Abhängigkeit von der gegebenen Geometrie des wenigstens einen Ausgleichselements, welches für ein Ausgleichen der Schrägausrichtung des Kraftfahrzeugs zur Verfügung steht, diejenige Ausgleichsstrecke ermittelt werden, welche ein besonders gutes Ausgleichen der Schrägausrichtung des Kraftfahrzeugs zu der Horizontalebene ermöglicht. Hierbei kann beim Ermitteln einer optimalen Ausgleichsstrecke die räumliche Lage des wenigstens einen Ausgleichselements zu dem wenigstens einen Rad des Kraftfahrzeugs frei wählbar sein. Ist diese besonders vorteilhafte Ausgleichsstrecke ermittelt worden, dann wird in Abhängigkeit von dieser ermittelten besonders vorteilhaften Ausgleichsstrecke die räumliche Lage des wenigstens einen Ausgleichselements relativ zu dem wenigstens einen Rad des Kraftfahrzeugs ermittelt, welche einzuhalten ist, um ein Bewegen des Kraftfahrzeugs entlang dieser ermittelten besonders vorteilhaften Ausgleichsstrecke zu ermöglichen. Diese ermittelte räumliche Lage des wenigstens einen Ausgleichselements relativ zu dem wenigstens einen Rad des Kraftfahrzeugs kann mittels der Ausgabeeinrichtung ausgegeben werden, wodurch der Fahrer und/oder ein Fahrzeuginsasse des Kraftfahrzeugs die ermittelte räumliche Lage des wenigstens einen Ausgleichselements einstellen kann. Hierdurch kann ein besonders gutes Ausgleichen der Schrägausrichtung des Kraftfahrzeugs relativ zu der Horizontalebene, insbesondere bis zu einer geraden Anordnung des Kraftfahrzeugs in der Horizontalebene, ermöglicht werden.

In weiterer Ausgestaltung der Erfindung ist vorgesehen, dass mittels der elektronischen Recheneinrichtung die Geometrie des wenigstens einen Ausgleichselements in Abhängigkeit von einer die Geometrie charakterisierenden, mittels einer Eingabeeinrichtung erfassten Benutzereingabe ermittelt wird und/oder mittels der elektronischen Recheneinrichtung die Geometrie des wenigstens einen Ausgleichselements über eine in der elektronischen Recheneinrichtung hinterlegte Datenbank ermittelt wird. Das bedeutet, dass die Geometrie des wenigstens einen Ausgleichselements in der Datenbank in der elektronischen Recheneinrichtung hinterlegt sein kann und die elektronische Recheneinrichtung für das Ermitteln der Ausgleichsstrecke auf die in der Datenbank hinterlegte Geometrie des wenigstens einen Ausgleichselements zurückgreifen kann. Alternativ oder zusätzlich kann über die Eingabeeinrichtung eine Person die Geometrie des wenigstens einen Ausgleichselements durch die Benutzereingabe repräsentiert für die elektronische Recheneinrichtung bereitstellen. Die Eingabeeinrichtung kann Teil des Kraftfahrzeugs sein oder Teil eines mobilen elektronischen Endgeräts wie beispielsweise eines Mobiltelefons oder eines Tabletcomputers und/oder eines Laptops sein. Die Eingabeeinrichtung ist dazu eingerichtet, die durch die Benutzereingabe repräsentierte Geometrie des wenigstens einen Ausgleichselements für die elektronische Recheneinrichtung bereitzustellen. In der elektronischen Recheneinrichtung kann die von der Eingabeeinrichtung empfangene Geometrie des wenigstens einen Ausgleichselements dem Ausgleichselement zugeordnet gespeichert werden. Insbesondere kann die von der Eingabeeinrichtung empfangene Geometrie des wenigstens einen Ausgleichselements dem Ausgleichselement zugeordnet in der Datenbank hinterlegt werden. Hierdurch kann sichergestellt werden, dass der elektronischen Recheneinrichtung die Geometrie des wenigstens einen Ausgleichselements für das Ermitteln der Ausgleichsstrecke zur Verfügung steht.

Die Erfindung betrifft des Weiteren ein Kraftfahrzeug, welches dazu eingerichtet ist, ein Verfahren, wie es bereits im Zusammenhang mit dem erfindungsgemäßen Verfahren beschrieben worden ist, durchzuführen. Hierfür umfasst das Kraftfahrzeug eine elektronischen Recheneinrichtung, welche dazu eingerichtet ist, eine eine Länge einer Wegstrecke charakterisierende Benutzereingabe zu empfangen und eine Steuereinrichtung, welche dazu eingerichtet ist, das Kraftfahrzeug zumindest teilautomatisiert die durch die Benutzereingabe charakterisierte Länge entlang der Wegstrecke zu bewegen. Über die elektronische Recheneinrichtung kann eine Person mittels der Benutzereingabe die Länge der Wegstrecke vorgeben, für welche das Kraftfahrzeug zu bewegen ist. Insbesondere bei einer Ausgestaltung des Kraftfahrzeugs als Wohnwagen kann sich die Wegstrecke zumindest bereichsweise über eine Oberfläche des wenigstens einen Ausgleichselement erstrecken. Somit kann die Person dem Kraftfahrzeug über die Benutzereingabe vorgeben, wie weit dieses sich über die Oberfläche des wenigstens einen Ausgleichselement bewegen soll, wodurch eine Schräglage des Kraftfahrzeugs ausgeglichen werden kann. Hierdurch ist die Schräglage besonders einfach ausgleichbar.

Alternativ oder zusätzlich umfasst das Kraftfahrzeug eine Orientierungserfassungseinrichtung, welche dazu eingerichtet ist, eine Schrägausrichtung des Kraftfahrzeugs relativ zu einer Horizontalebene zu ermitteln. Zum Ermitteln der Schrägausrichtung des Kraftfahrzeugs kann die Orientierungserfassungseinrichtung beispielsweise ein Kreiselinstrument umfassen. Mittels der Orientierungserfassungseinrichtung ist ein Verschwenken beziehungsweise eine Verschwenkung des Kraftfahrzeugs um die Fahrzeuglängsachse und/oder um die Fahrzeugquerachse aus der Horizontalebene heraus ermittelbar. In dieser alternativen oder zusätzlichen Ausgestaltung umfasst das Kraftfahrzeug die elektronische Recheneinrichtung, welche dazu eingerichtet ist, eine räumliche Lage und Geometrie wenigstens eines Ausgleichselements, auf welchem das Kraftfahrzeug anordenbar ist, zu ermitteln. Weiterhin ist die elektronische Recheneinrichtung dazu eingerichtet, in Abhängigkeit von der ermittelten Schrägausrichtung des Kraftfahrzeugs und der ermittelten räumlichen Lage und Geometrie des wenigstens einen Ausgleichselements eine Ausgleichsstrecke zu ermitteln und bereitzustellen. Entlang der Ausgleichsstrecke ist für ein Geraderichten des Kraftfahrzeugs das Kraftfahrzeug auf dem wenigstens einen Ausgleichselement zu bewegen. Unter dem Geraderichten des Kraftfahrzeugs ist zu verstehen, dass das Kraftfahrzeug in die Horizontalebene durch Rotation um die Fahrzeuglängsrichtung und/oder Fahrzeugquerrichtung hinein verschwenkt wird. Die elektronische Recheneinrichtung ist insbesondere dazu eingerichtet, die ermittelte Ausgleichsstrecke für eine Ausgabeeinrichtung und/oder eine Steuereinrichtung bereitzustellen. Hierdurch wird ermöglicht, dass das Kraftfahrzeug entlang der Ausgleichsstrecke bewegt wird, wodurch das Kraftfahrzeug gerade gerichtet werden kann. Das Kraftfahrzeug ist somit besonders einfach gerade richtbar, was insbesondere vorteilhaft ist, wenn das Kraftfahrzeug als Wohnmobil ausgebildet ist.

In einer Weiterbildung der Erfindung ist vorgesehen, dass das Kraftfahrzeug zusätzlich die Ausgabeeinrichtung umfasst, welche dazu eingerichtet ist, die ermittelte Ausgleichsstrecke von der elektronischen Recheneinrichtung zu empfangen und auszugeben. Für das Ausgeben der Ausgleichsstrecke kann die Ausgabeeinrichtung eine Bildschirmeinrichtung umfassen, auf welcher die ermittelte Ausgleichsstrecke anzeigbar ist. Das Ausgeben der ermittelten Ausgleichsstrecke mittels der Ausgabeeinrichtung ermöglicht, dass ein Fahrer des Kraftfahrzeugs besonders einfach und besonders genau über einen Verlauf der Ausgleichsstrecke informiert werden kann, wodurch der Fahrer das Kraftfahrzeug entlang der Ausgleichsstrecke führen kann.

In weiterer Ausgestaltung der Erfindung ist es vorgesehen, dass das Kraftfahrzeug die Steuereinrichtung umfasst, welche dazu eingerichtet ist, die Ausgleichsstrecke von der elektronischen Recheneinrichtung zu empfangen und das Kraftfahrzeug zumindest teilautomatisiert, insbesondere vollautomatisiert, entlang der Ausgleichsstrecke zu bewegen. Die Steuereinrichtung ermöglicht somit ein zumindest teilautomatisiertes Geraderichten des Kraftfahrzeugs durch Bewegen des Kraftfahrzeugs entlang der Ausgleichsstrecke. Mittels der Steuereinrichtung ist das Kraftfahrzeug besonders präzise entlang der Ausgleichsrichtung bewegbar, wodurch ein unbeabsichtigtes Herunterfahren von dem wenigstens einen Ausgleichselement zumindest im Wesentlichen vermieden werden kann. Weiterhin ermöglicht das zumindest teilautomatisierte Bewegen des Kraftfahrzeugs entlang der Ausgleichsstrecke ein für den Fahrer des Kraftfahrzeugs besonders komfortables Geraderichten des Kraftfahrzeugs.

In weiterer Ausgestaltung der Erfindung ist vorgesehen, dass das Kraftfahrzeug zusätzlich eine Erfassungseinrichtung umfasst, welche dazu eingerichtet ist, die Geometrie und/oder die räumliche Lage des wenigstens einen Ausgleichselements zu erfassen. Hierbei können entweder die Erfassungseinrichtung und/oder die elektronische Recheneinrichtung dazu eingerichtet sein, in Abhängigkeit von der erfassten Geometrie und/oder in Abhängigkeit von der räumlichen Lage des wenigstens einen Ausgleichselements eine Relativlage und somit eine Relativposition und Relativausrichtung des wenigstens einen Ausgleichselements zu dem Kraftfahrzeug, insbesondere zu wenigstens einem Rad des Kraftfahrzeugs zu ermitteln. Hierfür kann die Erfassungseinrichtung dazu eingerichtet sein, die erfasste Geometrie und/oder räumliche Lage des wenigstens einen Ausgleichselements für die elektronische Recheneinrichtung bereitzustellen. In Abhängigkeit von der mittels der Erfassungseinrichtung erfassten räumlichen Lage und/oder Geometrie des wenigstens einen Ausgleichselements kann die elektronische Recheneinrichtung dazu eingerichtet sein, die Ausgleichsstrecke zu ermitteln. Alternativ oder zusätzlich kann die Erfassungseinrichtung dazu eingerichtet sein, die erfasste Geometrie und/oder räumliche Lage des wenigstens einen Ausgleichselements für die Ausgabeeinrichtung bereitzustellen, mittels welcher die empfangene Geometrie und/oder räumliche Lage des wenigstens einen Ausgleichselements ausgebbar ist. Durch das Ausgeben der erfassten Geometrie und/oder räumlichen Lage des wenigstens einen Ausgleichselements mittels der Ausgabeeinrichtung kann der Fahrer über die mittels der Erfassungseinrichtung erfasste räumliche Lage und/oder Geometrie des wenigstens einen Ausgleichselements besonders einfach und genau informiert werden. Hierdurch kann der Fahrer das Kraftfahrzeug besonders informiert auf der Oberfläche des wenigstens einen Ausgleichselements für das Geraderichten des Kraftfahrzeugs bewegen. Eine Gefahr eines unbeabsichtigten Herunterfahrens des Kraftfahrzeugs von dem wenigstens einen Ausgleichselement beim Steuern des Kraftfahrzeugs durch den Fahrer kann hierdurch besonders gering gehalten werden.

Das Kraftfahrzeug kann in einer unabhängigen Ausgestaltung oder in einer unterstützenden Weiterbildung eine Wegstreckenzähleinrichtung umfassen, welche dazu eingerichtet ist, eine von dem Kraftfahrzeug, insbesondere dem als Wohnmobil ausgebildeten Kraftfahrzeug, zurückgelegte Strecke zu ermitteln und die ermittelte zurückgelegte Strecke für eine Anzeigeeinrichtung bereitzustellen. Hierbei ist es insbesondere vorgesehen, dass die Wegstreckenzähleinrichtung die zurückgelegte Strecke auf Dezimeter und/oder auf Zentimeter und/oder auf Millimeter genau ermittelt. Alternativ kann die Wegstreckenzähleinrichtung dazu eingerichtet sein, die Strecke in einer weiteren Längenmaßeinheit in der Größenordnung von Millimetern, Zentimetern oder Dezimetern, wie Zoll oder Inch, zu ermitteln. Weiterhin kann das Kraftfahrzeug die Anzeigeeinrichtung umfassen, welche dazu eingerichtet ist, die von der Wegstreckenzähleinrichtung ermittelte Strecke auszugeben, insbesondere auf Millimeter oder Zentimeter oder Dezimeter genau. Alternativ kann die Anzeigeeinrichtung dazu ausgebildet sein, die ermittelte Strecke in der weiteren Längenmaßeinheit auszugeben. Mittels der Anzeigeeinrichtung kann somit ein Fahrzeuginsasse besonders präzise über die mittels des Kraftfahrzeugs zurückgelegte Strecke informiert werden. Hierdurch kann ein Fahrer des Kraftfahrzeugs besonders genau steuern. Insbesondere kann der Fahrer das als Wohnmobil ausgebildete Kraftfahrzeug besonders genau auf wenigstens einem Ausgleichselement platzieren, wodurch eine Schräglage des Kraftfahrzeugs von dem Fahrer besonders unkompliziert ausgeglichen werden kann.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt die Zeichnung in:

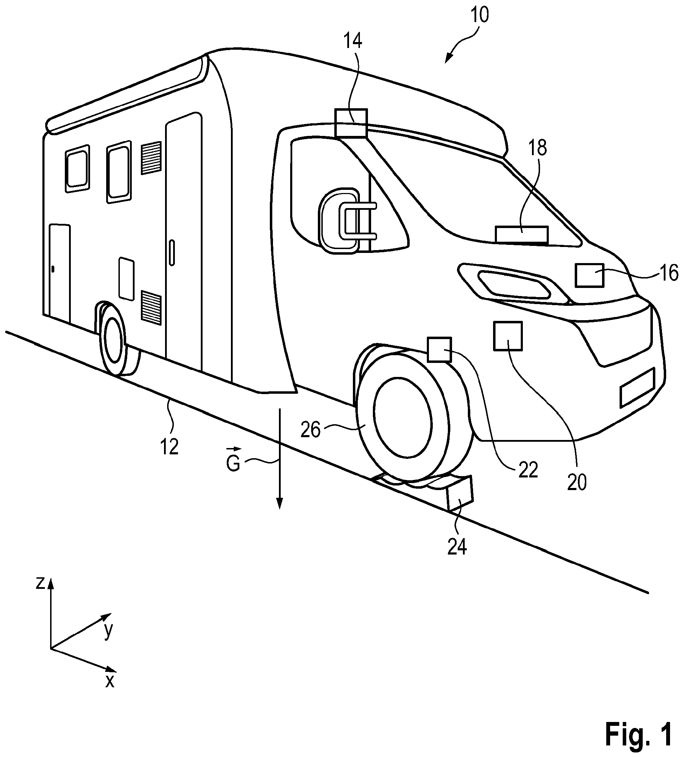

- Fig. 1: eine schematische Perspektivansicht eines Kraftfahrzeugs, vorliegend eines Wohnmobils, dessen wenigstens eines Rad auf einem Ausgleichselement angeordnet ist, wodurch das Kraftfahrzeug relativ zu einer Horizontalebene gerade gerichtet ist; und

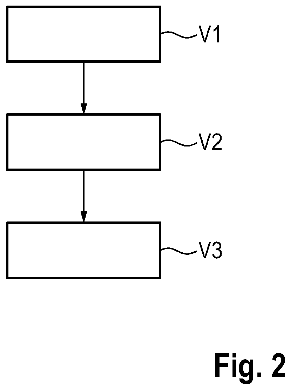

- Fig. 2: ein Verfahrensschema für ein Verfahren zum Betreiben des Kraftfahrzeugs, bei welchem eine Schrägausrichtung des Kraftfahrzeugs relativ zu der Horizontalebene ermittelt wird, eine räumliche Lage und Geometrie des wenigstens einen Ausgleichselements ermittelt wird und eine Ausgleichsstrecke in Abhängigkeit von der Schrägausrichtung und in Abhängigkeit von der ermittelten räumliche Lage und Geometrie des wenigstens einen Ausgleichselements ermittelt wird, entlang welcher das Kraftfahrzeug zumindest bereichsweise über eine Oberfläche des wenigstens einen Ausgleichselements bewegt wird, um die ermittelte Schrägausrichtung auszugleichen und somit das Kraftfahrzeug gerade zu richten.

In Fig. 1 ist ein Kraftfahrzeug 10, vorliegend ein Wohnmobil, gezeigt. Insbesondere bei Wohnmobilen ist es wünschenswert, dass diese in einer Horizontalebene ausgerichtet sind, um ein bequemes Wohnen für Personen in dem Wohnmobil zu ermöglichen. Wird das Kraftfahrzeug 10 auf einem schrägen oder unebenen Untergrund 12 abgestellt, dann kann es zu einer Schrägausrichtung des Kraftfahrzeugs 10 relativ zu der Horizontalebene kommen. Unter der Schrägausrichtung des Kraftfahrzeugs 10 ist zu verstehen, dass das Kraftfahrzeug 10 um seine Fahrzeuglängsrichtung x und/oder um seine Fahrzeugquerrichtung y aus der Horizontalebene herausgeschwenkt ist. Um diese Schrägausrichtung des Kraftfahrzeugs 10 besonders einfach und präzise ausgleichen zu können, weist das Kraftfahrzeug 10 eine schematisch mit einem Kästchen gekennzeichnete Orientierungserfassungseinrichtung 14, eine elektronische Recheneinrichtung 16 und vorliegend zusätzlich eine schematisch mit einem Kästchen gekennzeichnete Ausgabeeinrichtung 18, eine schematisch mit einem Kästchen gekennzeichnete Steuereinrichtung 20 und eine schematisch mit einem Kästchen gekennzeichnete Erfassungseinrichtung 22 auf.

In Fig. 2 ist ein Verfahrensschema für ein Verfahren zum Betreiben des Kraftfahrzeugs 10 gezeigt, welches ein Ausgleichen der Schrägausrichtung des Kraftfahrzeugs 10 relativ zu der Horizontalebene ermöglicht. Bei dem Verfahren ist es vorgesehen, dass in einem ersten Verfahrensschritt V1 die Schrägausrichtung des Kraftfahrzeugs 10 mittels der Orientierungserfassungseinrichtung 14 ermittelt wird. Hierfür kann die Orientierungserfassungseinrichtung 14 ein Kreiselinstrument aufweisen, mittels welchem eine Verschwenkung des Kraftfahrzeugs 10 um die Fahrzeuglängsrichtung x und/oder um die Fahrzeugquerrichtung y relativ zu der Horizontalebene ermittelt werden, welche die Angriffsrichtung der Gewichtskraft und somit den Gewichtskraftvektor *̅G̅*̅ des Kraftfahrzeugs 10 senkrecht schneidet. In einem zweiten Verfahrensschritt V2 ist es vorgesehen, dass eine räumliche Lage und Geometrie wenigstens eines Ausgleichselements 24, welches vorliegend als Ausgleichskeil ausgebildet ist, ermittelt werden. Die räumliche Lage und/oder die Geometrie des wenigstens einen Ausgleichselements 24 können mittels der Erfassungseinrichtung 22 erfasst werden. Hierfür kann die Erfassungseinrichtung 22 wenigstens eine Kamera aufweisen, welche mit ihrem Sichtbereich auf das wenigstens eine Ausgleichselement 24 gerichtet ist. Insbesondere kann für jedes Rad 26 des Kraftfahrzeugs 10 eine Kamera vorgesehen sein, mittels welcher das jeweilige Rad 26 und/oder das dem jeweiligen Rad 26 zugeordnete Ausgleichselement 24 aufzeichenbar ist. Die Erfassungseinrichtung 22 beziehungsweise die Kamera der Erfassungseinrichtung 22 ist vorliegend in einem Radhaus des Kraftfahrzeugs 10 angeordnet. Alternativ oder zusätzlich kann wenigstens eine Kamera der Erfassungseinrichtung 22 an einem Außenspiegel des Kraftfahrzeugs 10 angeordnet sein. Weitere alternative oder zusätzliche Anordnungen der wenigstens einen Kamera der Erfassungseinrichtung 22 an einer Außenseite des Kraftfahrzeugs 10 sind denkbar, wie insbesondere eine Anordnung der wenigstens einen Kamera an einer Stoßstange oder einem Schweller des Kraftfahrzeugs 10. Insbesondere kann die wenigstens eine Kamera der Erfassungseinrichtung 22 dazu eingerichtet sein, das wenigstens eine Ausgleichselement 24 repräsentierende Bilddaten aufzuzeichnen und für eine Bilderverarbeitungseinrichtung bereitzustellen. Mittels der Bildverarbeitungseinrichtung können in Abhängigkeit von den empfangenen Bilddaten Abmessungen und somit die Geometrie des durch die Bilddaten charakterisierten wenigstens einen Ausgleichselements 24 und/oder eine relative räumliche Lage und somit eine Relativposition und/oder eine relative Ausrichtung des wenigstens einen durch die Bilddaten charakterisierten Ausgleichselements 24 relativ zu dem Kraftfahrzeug 10 ermittelt werden, insbesondere relativ zu wenigstens einem Rad 26 des Kraftfahrzeugs 10. Die Geometrie des wenigstens einen Ausgleichselements 24 kann alternativ oder zusätzlich in einer Datenbank der elektronischen Recheneinrichtung 16 hinterlegt sein. Weiterhin alternativ oder zusätzlich kann die Geometrie des wenigstens einen Ausgleichselements 24 mittels der elektronischen Recheneinrichtung 16 von einer Eingabeeinrichtung empfangen werden, wobei die Eingabeeinrichtung dazu eingerichtet ist, eine die Geometrie des Ausgleichselements 24 charakterisierende Benutzereingabe zu empfangen und die durch die Benutzereingabe charakterisierte Geometrie des Ausgleichselements 24 für die elektronische Recheneinrichtung 16 bereitzustellen. Die elektronische Recheneinrichtung 16 kann dazu eingerichtet sein, die von der Eingabeeinrichtung empfangene Geometrie des Ausgleichselements 24 in der Datenbank zu speichern.

Die elektronische Recheneinrichtung 16 ist weiterhin dazu eingerichtet, in einem dritten Verfahrensschritt V3 in Abhängigkeit von der ermittelten Schrägausrichtung des Kraftfahrzeugs 10 und der ermittelten räumliche Lage und Geometrie des wenigstens einen Ausgleichselements 24 eine Ausgleichsstrecke zu ermitteln. Diese Ausgleichsstrecke erstreckt sich zumindest bereichsweise über eine Oberfläche des wenigstens einen Ausgleichselements 24. Die Ausgleichsstrecke kann eine Bewegungstrajektorie repräsentieren, entlang welcher das Kraftfahrzeug 10 zu bewegen ist und dabei zumindest bereichsweise über die Oberfläche des wenigstens einen Ausgleichselements 24 zu bewegen ist, um die Schrägausrichtung des Kraftfahrzeugs 10 ausgleichen zu können und somit das Kraftfahrzeug 10 zumindest im Wesentlichen in die Horizontalebene auszurichten, worunter zu verstehen ist, dass sowohl die Fahrzeuglängsrichtung x als auch die Fahrzeugquerrichtung y zumindest im Wesentlichen parallel zur Horizontalebene verlaufen. Um ein Herunterfahren des Kraftfahrzeugs 10 von dem wenigstens einen Ausgleichselement 24 beim Geraderichten des Kraftfahrzeugs 10 zumindest im Wesentlichen unterbinden zu können, ist es vorgesehen, dass die Ausgleichsstrecke unter Berücksichtigung wenigstens einer Grenzbedingung für die Ausgleichsstrecke ermittelt wird. Die Grenzbedingung kann in Abhängigkeit von der ermittelten Geometrie des wenigstens einen Ausgleichselements 24 vorgegeben sein. Insbesondere kann eine maximale Keillänge des als Ausgleichskeil ausgebildeten wenigstens einen Ausgleichselements 24 eine Grenzbedingung für das Ermitteln der Ausgleichsstrecke vorgeben. Hierdurch kann vermieden werden, dass das Kraftfahrzeug 10 beim Bewegen entlang der Ausgleichsstrecke aufgrund eines Überfahrens einer Kante des Ausgleichselements 24 mit seinem Rad 26 von dem Ausgleichselement 24 herunterfährt. Weiterhin kann durch eine Breite einer von dem Kraftfahrzeug 10 befahrbaren Oberfläche des wenigstens einen Ausgleichselements 24 wenigstens eine Grenzbedingung für das Ermitteln der Ausgleichsstrecke vorgegeben werden. Hierdurch kann einem seitlichen Abrutschen des Rads 26 des Kraftfahrzeugs 10 von der Oberfläche des Ausgleichselements 24 vorgebeugt werden.

In dem dritten Verfahrensschritt V3 kann die ermittelte Ausgleichsstrecke mittels der elektronischen Recheneinrichtung 16 für die Ausgabeeinrichtung 18 und/oder für die Steuereinrichtung 20 bereitgestellt werden. Mittels der Ausgabeeinrichtung 18 ist die ermittelte Ausgleichsstrecke ausgebbar, vorliegend im Innenraum des Kraftfahrzeugs 10. Über das Ausgeben der ermittelten Ausgleichsstrecke mittels der Ausgabeeinrichtung 18 kann der Fahrer des Kraftfahrzeugs 10 über die ermittelte Ausgleichsstrecke informiert werden und infolgedessen das Kraftfahrzeug 10 entlang der ermittelten Ausgleichsstrecke führen. Das Bereitstellen der ermittelten Ausgleichsstrecke für die Steuereinrichtung 20 ermöglicht, dass mittels der Steuereinrichtung 20 das Kraftfahrzeug 10 zumindest teilautomatisiert, insbesondere vollautomatisiert und damit autonom, entlang der Ausgleichsstrecke geführt werden kann. Hierfür kann die Steuereinrichtung 20 eine Quersteuerung und/oder eine Längssteuerung des Kraftfahrzeugs 10 übernehmen.

Um eine Ausgleichsstrecke ermitteln zu können, durch das Abfahren von welcher das Kraftfahrzeug 10 in seiner Schrägausrichtung besonders gut korrigiert werden kann und damit mit besonders hoher Sicherheit gerade zur Horizontalebene ausgerichtet werden kann, und durch welche gleichzeitig durch die Geometrie des wenigstens einen Ausgleichselements 24 vorgegebene Grenzbedingungen eingehalten werden können, kann die räumliche Lage des wenigstens einen Ausgleichselements 24 angepasst werden. Hierfür ist es vorgesehen, dass mittels der elektronischen Recheneinrichtung 16 die Ausgleichsstrecke ermittelt wird, welche ein besonders gutes Ausgleichen der Schrägausrichtung des Kraftfahrzeugs 10 bei Einhaltung der durch das wenigstens eine Ausgleichselement 24 vorgesehenen Grenzbedingungen ermöglicht wird, wobei die Ausgleichsstrecke bei freier Wahl der relativen räumliche Lage des Ausgleichselements 24 zu dem Kraftfahrzeug 10 ermittelt wird. Die dieser ermittelten Ausgleichsstrecke zugeordnete gewählte Relativposition und Relativausrichtung des wenigstens einen Ausgleichselements 24 zu dem Kraftfahrzeug 10 kann mittels der Ausgabeeinrichtung 18 ausgegeben werden, wodurch eine Person das Ausgleichselement 24 in der vorgegebenen Relativposition und Relativausrichtung relativ zu dem Kraftfahrzeug 10, insbesondere wenigstens einem Rad 26 des Kraftfahrzeugs 10, anordnen kann. Hierdurch wird ermöglicht, dass das Kraftfahrzeug 10 entlang der mittels der elektronischen Recheneinrichtung 16 unter Einhaltung der Grenzbedingungen für das besonders gute Ausgleichen der Schrägausrichtung des Kraftfahrzeugs 10 ermittelten Ausgleichsstrecke bewegt werden kann.

Alternativ zu dem oben beschriebenen Verfahren kann mittels der elektronischen Recheneinrichtung 16 eine eine Länge einer Wegstrecke charakterisierende Benutzereingabe empfangen und für die Steuereinrichtung 20 bereitgestellt werden. Mittels der Steuereinrichtung 20 kann das Kraftfahrzeug 10 zumindest teilautomatisiert die durch die Benutzereingabe charakterisierte Länge entlang der Wegstrecke bewegt werden.

Der beschriebenen Erfindung liegt die Erkenntnis zugrunde, dass ein Fahren eines Wohnmobils auf Ausgleichskeilen als Ausgleichselementen 24 aus mehreren Gründen besonders heikel sein kann. Zum einen kann ein Steigungswinkel des jeweiligen Ausgleichskeils besonders steil sein und ein Anfahren beziehungsweise eine Gasdosierung sollte besonders genau erfolgen. Weiterhin kann es vorgesehen sein, dass das Wohnmobil auf eine genau gewünschte Position zu fahren ist, um eine gegebene Schräge auszugleichen. Besonders heikel kann ein Anfahren einer obersten Keilposition des Ausgleichskeils sein, da bei einem Überfahren des Ausgleichskeils das Wohnmobil an der Rückseite des Ausgleichskeils herunterfallen kann. Weiterhin ist eine direkte Einsehbarkeit von Ausgleichskeilen von einem Fahrersitz aus oftmals nicht gegeben. Es kann somit vorkommen, dass eine bereits gefahrene beziehungsweise eine noch erforderliche Strecke von einer außerhalb des Wohnmobils angeordneten weiteren Person zu beobachten ist und die Beobachtung per Zuruf beziehungsweise per Handzeichen an den Fahrer zurückgemeldet wird. Es ist dem Fahrer des Wohnmobils beim Stand der Technik lediglich durch Schätzen möglich herauszufinden, wie weit das Wohnmobil auf den wenigstens einen Ausgleichskeil zu fahren ist, um eine durch das Gelände gegebene Schiefstellung des Wohnmobils auszugleichen. Dies ist besonders schwierig, wenn das Wohnmobil in mehreren Achsen schief steht und somit sowohl um die Fahrzeuglängsrichtung x als auch um die Fahrzeugquerrichtung y ausgehend von der Horizontalebene verschwenkt ist.

Für ein Ausgleichen der Schrägausrichtung des Kraftfahrzeugs 10 kann wenigstens ein Ausgleichskeil vor wenigstens einem Rad 26 des Kraftfahrzeugs 10 positioniert werden und eine Person entsprechend der auszugleichenden Schrägausrichtung eine Strecke vorgeben, insbesondere für die Steuereinrichtung 20, welche das Kraftfahrzeug 10 den wenigstens einen Ausgleichskeil hochfahren soll. Diese Strecke kann von dem Kraftfahrzeug 10 automatisiert und/oder assistiert zurückgelegt werden.

Bei dem in Zusammenhang mit Fig. 2 beschriebenen Verfahren kann das Kraftfahrzeug 10 mittels der Orientierungserfassungseinrichtung 14 seine aktuelle Schiefstellung und damit die Schrägausrichtung erfassen und das wenigstens eine in Fahrtrichtung vor wenigstens ein Rad 26 gelegte Ausgleichselement 24 so weit hochfahren, bis die Schrägausrichtung relativ zu der Horizontalebene ausgeglichen ist. Hierbei kann das Kraftfahrzeug 10 eine maximal zur Verfügung stehende Keillänge des jeweiligen Ausgleichskeils berücksichtigen, um zu verhindern, dass das Kraftfahrzeug 10 in Fahrtrichtung hinter dem wenigstens einen Ausgleichskeil mit dem Rad 26 herunterfällt.

Ausgehend von der mittels der Orientierungserfassungseinrichtung 14 ermittelten Schrägausrichtung kann das Kraftfahrzeug 10 einen Vorschlag zur Positionierung des wenigstens einen Ausgleichselements 24 relativ zu dem Kraftfahrzeug 10 ermitteln. Dieser ermittelte Vorschlag kann über die Ausgabeeinrichtung 18 ausgegeben werden. Infolgedessen kann eine Person, insbesondere der Fahrer, das wenigstens eine Ausgleichselement 24 entsprechend dem ermittelten Vorschlag positionieren. Anschließend kann das Kraftfahrzeug 10 automatisiert und/oder assistiert das von der Person positionierte wenigstens eine Ausgleichselement 24 hochfahren.

Für das Berücksichtigen der maximal zur Verfügung stehenden Keillänge des wenigstens einen Ausgleichskeils beziehungsweise für das Ermitteln des Vorschlags zur Positionierung des wenigstens einen Ausgleichskeils zieht das Kraftfahrzeug 10 die Geometrie des wenigstens einen Ausgleichskeils heran. Diese Geometrie des wenigstens einen Ausgleichskeils kann in Abhängigkeit von einer Benutzereingabe ermittelt werden, wobei die Benutzereingabe wenigstens eine Länge und eine Höhe des wenigstens einen Ausgleichskeils repräsentiert. Alternativ oder zusätzlich kann die Geometrie des wenigstens einen Ausgleichskeils aus der fahrzeugeigenen Datenbank herangezogen werden. Bereits mit wenigen Keilmodellen kann ein großer Teil von im Feld verwendeten Varianten an Ausgleichskeilen dargestellt werden. Somit können in der Datenbank mit besonders wenig hinterlegten Keilmodellen besonders viele Varianten an Ausgleichskeilen repräsentiert sein.

Das wenigstens eine Ausgleichselement 24 ermöglicht ein besonders einfaches und komfortables Ausgleichen der Schrägausrichtung des Kraftfahrzeugs 10 insbesondere unter Verwendung von besonders preisgünstigen und leichten Ausgleichskeilen als wenigstens einem Ausgleichselement 24. Um den Fahrer des Kraftfahrzeugs 10 beim Steuern des Kraftfahrzeugs 10 besonders gut unterstützen zu können, kann eine mittels der Erfassungseinrichtung 22 erfasste Position eines Rads 26 des Kraftfahrzeugs 10 auf einem dem Rad 26 zugeordneten Ausgleichselement 24 über die Ausgabeeinrichtung 18 bereitgestellt werden. Mittels der Ausgabeeinrichtung 18 ist ein von der Erfassungseinrichtung 22 erfasstes Bild des Rads 26 auf dem Ausgleichselement 24 ausgebbar, insbesondere für den Fahrer des Kraftfahrzeugs 10.

Insgesamt zeigt die Erfindung, wie ein Assistenzsystem für ein Fahren eines Wohnmobils auf Ausgleichskeile bereitgestellt werden kann.

### Bezugszeichenliste

- 10: Kraftfahrzeug
- 12: Untergrund
- 14: Orientierungserfassungseinrichtung
- 16: elektronische Recheneinrichtung
- 18: Ausgabeeinrichtung
- 20: Steuereinrichtung
- 22: Erfassungseinrichtung
- 24: Ausgleichselement
- 26: Rad
- x: Fahrzeuglängsrichtung
- y: Fahrzeugquerrichtung
- z: Fahrzeughochrichtung
- *̅G̅*̅: Gewichtskraftvektor

## Patentansprüche

1. Verfahren zum Betreiben eines Kraftfahrzeugs (10),
- bei welchem mittels einer elektronischen Recheneinrichtung (16) eine eine Länge einer Wegstrecke charakterisierende Benutzereingabe empfangen wird und mittels einer Steuereinrichtung (20) das Kraftfahrzeug (10) zumindest teilautomatisiert die durch die Benutzereingabe charakterisierte Länge entlang der Wegstrecke bewegt wird, oder
- bei welchem mittels einer Orientierungserfassungseinrichtung (14) eine Schrägausrichtung des Kraftfahrzeugs (10) relativ zu einer Horizontalebene ermittelt wird, eine räumliche Lage und Geometrie wenigstens eines Ausgleichselements (24) ermittelt werden, auf welchem das Kraftfahrzeug (10) anordenbar ist, und mittels der elektronischen Recheneinrichtung (16) in Abhängigkeit von der ermittelten Schrägausrichtung des Kraftfahrzeugs (10) und der ermittelten räumlichen Lage und Geometrie des wenigstens eines Ausgleichselements (24) eine Ausgleichsstrecke ermittelt und bereitgestellt wird, entlang welcher für ein Geraderichten des Kraftfahrzeugs (10) das Kraftfahrzeug (10) auf dem wenigstens einen Ausgleichselement (24) zu bewegen ist.

2. Verfahren nach Anspruch 1, wobei mittels einer Ausgabeeinrichtung (18) die ermittelte Ausgleichsstrecke ausgegeben wird.

3. Verfahren nach Anspruch 1 oder 2, wobei mittels einer Steuereinrichtung (20) das Kraftfahrzeug (10) zumindest teilautomatisiert entlang der Ausgleichsstrecke bewegt wird.

4. Verfahren nach einem der vorhergehenden Ansprüche, wobei in Abhängigkeit von der ermittelten Geometrie des wenigstens einen Ausgleichselements (24) eine Grenzbedingung für die Ausgleichsstrecke ermittelt wird und die Ausgleichsstrecke in Abhängigkeit von der vorgegebenen Grenzbedingung ermittelt wird.

5. Verfahren nach einem der vorhergehenden Ansprüche, wobei in Abhängigkeit von der ermittelten Ausgleichsstrecke für das wenigstens eine Ausgleichselement (24) eine Soll-Lage ermittelt wird, in welcher das wenigstens eine Ausgleichselement (24) relativ zu dem Kraftfahrzeug (10) anzuordnen ist, wodurch das Kraftfahrzeug (10) entlang der ermittelten Ausgleichsstrecke bewegbar ist, und die ermittelte Soll-Lage mittels der Ausgabeeinrichtung (18) ausgegeben wird.

6. Verfahren nach einem der vorhergehenden Ansprüche, wobei mittels der elektronischen Recheneinrichtung (16) die Geometrie des wenigstens einen Ausgleichselements (24) in Abhängigkeit von einer die Geometrie charakterisierenden, mittels einer Eingabeeinrichtung erfassten Benutzereingabe und/oder über eine in der elektronischen Recheneinrichtung (16) hinterlegte Datenbank ermittelt wird.

7. Kraftfahrzeug (10), welches dazu eingerichtet ist, ein Verfahren nach einem der vorhergehenden Ansprüche auszuführen,
- mit einer elektronischen Recheneinrichtung (16), welche dazu eingerichtet ist, eine eine Länge einer Wegstrecke charakterisierende Benutzereingabe zu empfangen, und einer Steuereinrichtung (20), welche dazu eingerichtet ist, das Kraftfahrzeug (10) zumindest teilautomatisiert die durch die Benutzereingabe charakterisierte Länge entlang der Wegstrecke zu bewegen, und/oder
- mit einer Orientierungserfassungseinrichtung (14), welche dazu eingerichtet ist, eine Schrägausrichtung des Kraftfahrzeugs (10) relativ zu einer Horizontalebene zu ermitteln, und der elektronischen Recheneinrichtung (16), welche dazu eingerichtet ist, eine räumliche Lage und Geometrie wenigstens eines Ausgleichselements (24), auf welchem das Kraftfahrzeug (10) anordenbar ist, zu ermitteln und in Abhängigkeit von der ermittelten Schrägausrichtung des Kraftfahrzeugs (10) und der ermittelten räumlichen Lage und Geometrie des wenigstens eines Ausgleichselements (24) eine Ausgleichsstrecke zu ermitteln und bereitzustellen, entlang welcher für ein Geraderichten des Kraftfahrzeugs (10) das Kraftfahrzeug (10) auf dem wenigstens einen Ausgleichselement (24) zu bewegen ist.

8. Kraftfahrzeug (10) nach Anspruch 7, wobei zusätzlich eine Ausgabeeinrichtung (18) vorgesehen ist, welche dazu eingerichtet ist, die ermittelte Ausgleichsstrecke auszugeben.

9. Kraftfahrzeug (10) nach Anspruch 7 oder 8, wobei zusätzlich eine Steuereinrichtung (20) vorgesehen ist, welche dazu eingerichtet ist, das Kraftfahrzeug (10) zumindest teilautomatisiert entlang der Ausgleichsstrecke zu bewegen.

10. Kraftfahrzeug (10) nach einem der Ansprüche 7 bis 9, wobei zusätzlich eine Erfassungseinrichtung (22) vorgesehen ist, welche dazu eingerichtet ist, die Geometrie und/oder die räumliche Lage des wenigstens einen Ausgleichselements (24) zu erfassen.
